# EUROPEAN PATENT APPLICATION

(11) **EP 4 699 721 A1**
(43) Date of publication of application: **25.02.2026**
(21) Application number: 24196269.5
(22) Date of filing: 23.08.2024
(51) Int. Cl.: B22D 11/00, F16B 25/00, B21C 1/00, B21C 23/00, B21C 23/08, B21C 23/18, B21C 23/22, B21C 23/24, B21C 37/04, B21K 1/56, C21D 7/10, C21D 8/06, C21D 9/00, C22C 38/02, C22C 38/04, C22C 38/44, C22C 38/46, C22C 38/48, C22C 38/50

(54) **CONCRETE SCREW AND PROCESS FOR MANUFACTURING A COMPOSITE CONCRETE SCREW**

(71) Applicant: Technische Universität München, in Vertretung des Freistaats Bayern, 80333 München (DE)
(72) Inventor: Kammerloher, Simon, 85356 Freising (DE); Hoyer, Julika, 85356 Freising (DE); Weidner, Christoph, 85084 Reichertshofen (DE); Volk, Wolfram, 82393 Iffeldorf (DE)
(74) Representative: Lucke, Andreas

(57) **Abstract**

A screw (1) having a core section (11) made of a martensitic material and a mantle section (12) surrounding the core section made of a corrosion-resistant steel material and a process for manufacturing such a screw.

## Description

### TECHNICAL FIELD

The present application relates to a screw made of a composite material and a process for manufacturing a composite screw, and in particular to a concrete screw and a corresponding manufacturing process.

### TECHNICAL BACKGROUND

Concrete screws may be screwed into a pre-drilled cylindrical hole without a dowel. Concrete screws are sometimes referred to as "screw anchors". Concrete screws may have a thread in the area of the tip which may be toothed to cut an internal thread into the building material while being installed. Thanks to this positive-locking, expansion pressure-free connection, small edge distances and immediate loading are possible - without special drilling, special tools or hardening time.

An advantage of screw anchors in comparison to anchor systems comprising dowels lies in their safety. Anchor systems are prone to concealed defects due to operator errors such as non-compliance with hardening times, incorrect drill hole cleaning or non-compliance with torques. In contrast to anchor systems, no torque control is required for the installation of screw anchors. It is sufficient to install the concrete screws by hand or with tangential impact wrenches. This simplifies the installation process and ensures a high degree of application safety.

Conventional concrete screws have a tip of martensitic steel which ensures the necessary hardness to cut a thread into the concrete. For concrete screws, material concepts with high surface hardness, high resistance to general corrosion, pitting corrosion as well as chloride- or hydrogen-induced embrittlement and good plastic formability are often desired. However, martensitic steel is known to be prone to corrosion in the acidic milieu caused by the surrounding concrete where concrete screws are typically installed.

DE 10 2021 006 491 B3 describes a method of manufacturing a stainless-steel fastener designed to be used as a concrete screw. The fastener consists of uniform material made of martensitic hardenable steel. The crystalline steel structure of the blank is initially martensite, the hardness of which is between 230 and 350 HV. The blank is then annealed to convert a partial crystalline structure of the crystalline steel structure into ferrite. The annealed blank is successively subjected to a cutting process, a head forming process and a thread cutting process. This is followed by a heat treatment to convert the partial crystalline structure of ferrite into martensite and thus to obtain a fastener with a higher hardness of at least 500 HV to facilitate a direct drilling effect when a nitriding effect derived from the nitrogen and carbon content occurs during the heat treatment. Molybdenum, chromium and nickel content are provided with the intention to impart some corrosion-resistant properties to the fastener. Nevertheless, the martensite suffers from corrosion during the screws long lifespan which may ultimately lead to material failure.

WO2019170507A1 relates to bimetallic concrete screws manufactured from two bolts, i.e. a tip element and a drive element, that are joined in a welding process, for example by laser welding or resistance welding. The tip element is made from a first blank of martensitic steel, which ensures the necessary hardness to cut a thread into the concrete. The drive element comprising the rear part of the thread, the shank and the bolt head are made from a second blank comprising or made of a duplex steel or an austenitic stainless steel. The weld seam is removed by machining before the screw is formed from the bolt. The resulting screw is designed to be used in a concrete substrate. The manufacturing method is complex and complicated. The process requires a step of welding a tip element to a drive element in a rather complicated manner such that the threads of the elements and their general orientation are aligned. Further, the elements are threaded individually. It is estimated that cost of manufacturing a bimetallic screw manufactured in this manner are primarily driven by the process costs which significantly exceed the raw material costs.

An object of the invention is to provide a method for producing a screw, in particular a concrete screw, with which a particularly efficient and corrosion-resistant screw can be obtained rapidly and with particularly low production costs. It is also an object of the invention to provide a screw with the aforementioned advantages.

### SUMMARY

The technical problems as indicated herein are solved by the subject matter of the independent claims. Particular examples of the claimed subject matter are given by the dependent claims.

The present disclosure relates to a process for manufacturing a composite screw, in particular a concrete screw, having a core section made of a martensitic material and a mantle section surrounding the core section made of a corrosion-resistant steel material.

The screw may have a generally rod-like shape. The screw may define an axial direction which may correspond to the main extension of the screw. In particular, the axial direction may correspond to the extension of the screw from a screw head to a screw tip. The screw may define a radial direction which may correspond to the lateral extension of the screw. The radial direction may in particular be perpendicular with respect to the axial direction. The radial direction may in particular correspond to the direction in which a thread extends from a shaft of the screw. The screw may have a diameter (outer diameter) measured in the radial direction. The screw may have a diameter of at least D6, at least D8, or at least D10 (in mm). Alternatively or additionally, the screw may have a diameter of no more than D200, no more than D150, no more than D100, or no more than D50 (in mm). The screw may comprise a tip section and a driving section. The driving section may comprise a shaft section and a head section. A shaft section of the screw may refer to an axial section of the screw between the tip section and the head section. The shaft section preferably refers to an axial section of the screw of substantially constant diameter and threading. The screw may comprise at least one thread extending in the shaft section. The shaft section may comprise or may consist of at least one threaded shaft section. The threaded shaft section may extend from the tip section to the head section. The shaft section may comprise a threaded shaft section and a threadless shaft section, wherein the threadless shaft section may connect to the head section and wherein the threaded shaft section may connect to the tip section of the screw.

A composite screw consists of at least two components having different material compositions. The core section may comprise or may consist of a first material, in particular a first steel material, and the mantle section may comprise or may consist of a second material, in particular a second steel material, wherein the first material is different from the second material. In particular, the first material may have a larger hardness than the second material. For example, the first material may have a hardness (Rockwell hardness) of 56 to 60 HRC, and the second material may have a lower hardness, such as a hardness of less than 50 HRC, in particular of less than 40 HRC, more particularly of less than 30 HRC. Alternatively or additionally, the second material may have a larger corrosion resistance than the first material. The corrosion resistance may for example be defined in terms of a PRE-value (Pitting Resistance Equivalent), which may be calculated in accordance with the following formula: PRE = %Cr + 3,3x%Ni + 16x%N wherein PRE designates the PRE-value, %Cr designates a Chromium-content in the steel alloy, %Mo designates a Molybdenum-content in the steel alloy, and %N designates a Nitrogen-content in the steel alloy. The second material may have a larger PRE-value than the first material.

The core section may have a generally cylindrical shape. The core section may be surrounded, in particular in the circumferential direction, by the mantle section. Preferably, at least 50%, in particular at least 75 %, more particularly at least 80% or at least 90% of the core section extending in the axial direction is surrounded by the mantle section in the circumferential direction. The core section may be exposed at the tip section and/or at the head section of the screw. The core section may have a diameter, in particular a minimal diameter, which may preferably be determined in a shaft section of the screw, in the range of D8 to D50, in particular in the range of D10 to D20 (in mm).

The mantle section may have a generally hollow-cylindrical shape. The mantle section may envelope the core section. The mantle section may surround the core section, in particular in the circumferential direction. In particular, the mantle section may completely surround the core section in the circumferential direction. Preferably, the mantle section envelopes at least 50%, in particular at least 75 %, more particularly at least 80% or at least 90% of the core section in the axial direction. The mantle section may have an inner diameter corresponding to, preferably equal to, the outer diameter of the core section. The mantle section may have an outer diameter, in particular a minimal outer diameter, which may preferably be determined in a shaft section of the screw, in the range of D10 to D100, in particular in the range of D11 to D30 (in mm). The mantle section may have a radial thickness, which may preferably be determined in a shaft section of the screw, equal to or smaller than the radial thickness of the core section. The corrosion-resistant steel material is selected sensibly.

Martensitic material such as particular martensite may be a metastable microstructure of solids that is formed without diffusion and athermal through a cooperative shear movement from the initial structure. Alternatively, martensitic material may be formed by thermal processing. Cooperative movement means that the martensite lattice is only formed from the initial lattice through positional changes from the initial lattice. The martensitic steel material is selected sensibly.

Preferably, the process for manufacturing a composite screw is free of a step of welding a section made of corrosion-resistant steel material to a section made of a martensitic material. In particular, the process for manufacturing a composite screw is performed without any welding. In comparison to conventional manufacturing methods, a significant reduction of process costs can be achieved. In particular, the process costs can be decreased below the material costs.

According to an aspect of the disclosure, the process for manufacturing a composite screw may comprise a step of continuous composite casting a composite billet, wherein a composite material strand is cast, having a strand core made of an austenite material and a strand mantle completely surrounding the core in a circumferential direction made of the corrosion-resistant steel material. Continuous composite casting refers to a process of continuous casting a composite material from at least two different materials. The step of composite casting is configured to produce a composite billet which comprises or consists of the at least two different materials. In the present disclosure, the continuous casting process step is configured to create a composite strand which includes a strand core and a strand mantle. The step of continuous casting may be configured to create a billet of cylindrical shape and/or having a circular cross section. Alternatively or additionally, the step of continuous casting may be configured to create a strand core of cylindrical shape and/or having a circular cross section. Further alternatively or additionally, the step of continuous casting may be configured to create a billet comprising a strand mantle having a hollow cylindrical shape and/or having an annular cross section. Preferably, the composite strand created in the continuous casting step consists of the strand mantle and the strand core. In the composite strand created by continuous casting, the first material, in particular the austenite material, may be in direct physical contact with the second material, in particular the corrosion-resistant steel material. The outer diameter of the composite strand may be larger than the outer diameter of the composite screw, in particular the outer diameter in the shaft section of the composite screw. It may be preferred that the diameter of the composite strand is reduced in subsequent forming and/or shaping steps during the process of manufacturing a composite screw. An austenite material shall be understood to relate to any material, in particular any metal material, more particularly any steel material, which may be transformed into a martensitic material. The austenite material may for example comprise or consist of austenitic stainless A2 or A4 steel (comparable to 1.4301 or 1.4401).

According to a further aspect of the process for manufacturing a composite screw according to the present disclosure, the first material designated to form the strand core may be provided as a solid. In particular, the strand core may be provided as a solid for the step of continuous composite casting. The strand core may be provided as a solid rod, for example a solid billet, in particular having a cylindrical shape and/or circular cross-section. The step of continuous casting may be configured such that the temperature of the first material introduced as a solid and the temperature of the second material, which is designated to form the strand mantle, are adapted to each other so as to form a composite billet having a size, composition and/or radial thickness ratio constant in the longitudinal (axial) direction of the billet. Additionally or alternatively, the temperatures of the first and second materials joined in the step of continuous casting are adapted such that a stable interface is formed between the strand core and the strand mantle.

Alternatively, according to further aspect of the process for manufacturing a composite screw according to the present disclosure, the first material designated to form the strand core may be provided as a melt. In particular, a first melt is provided for forming the strand core in the continuous composite casting step. The step of continuous casting may be configured such that the temperature of the first material introduced as a melt and the temperature of the second material, which is designated to form the strand mantle, are adapted to each other so as to form a composite billet having a size, composition and/or radial thickness ratio constant in the longitudinal (axial) direction of the billet. Additionally or alternatively, the temperatures of the first and second materials joined in the step of continuous casting are adapted such that a stable interface is formed between the strand core and the strand mantle.

In the process for manufacturing a composite screw, the second material designated to form the strand mantle may be provided as a melt. In particular, a second melt is provided for forming the strand mantle in the continuous composite casting step. Preferably, the viscosity of the second material which is brought into contact with the first material in the step of continuous casting is configured such that a stable interface is formed between the strand core and the strand mantle. During the step of continuous casting, diffusion may occur at the interface between the first material and the second material. Preferably, mixing of the first material and the second material during the step of continuous casting is limited, in particular limited to a radial thickness of less than 1 mm, in particular of less than 0.5 mm, more particularly of less than 0.1 mm, or even of less than 10 µm or of less than 1 µm.

In some embodiments of the process for manufacturing a composite screw, a forming process step is performed on the billet. The forming process step may in particular be configured to cause the core section, in particular the complete core section, of the composite material strand to experience martensitic transformation. During the forming process step, at least 50%, in particular at least 75%, more particularly at least 90% or at least 95%, of the first material in the core section as seen in a cross sectional cut in a plane perpendicular to the longitudinal (axial) direction of the billet, may be transformed from austenite to martensite. Alternatively, a forming process step may be performed only for the tip section of the composite screw. Thus, optionally, during the forming process step less than 50%, in particular less than 25%, more particularly less than 15% or less than 10%, of the first material in the core section as seen in a cross sectional cut in a plane perpendicular to the longitudinal (axial) direction of the billet, may be transformed from austenite to martensite. Preferably, all of the first material in the core section as seen in a cross sectional cut in a plane perpendicular to the longitudinal (axial) direction of the billet, is transformed from austenite to martensite during the forming process step. The martensitic transformation of all or of at least part of the core section may take place during one or more forming process steps. In particular, the core section of the billet after continuous casting and prior to a subsequent forming process step may comprise or may consist of an austenite; and after the forming process step(s), the core section comprises or consists of a martensite.

According to a further development of the process for manufacturing a composite screw, the forming process step comprises at least one of a wire drawing process, a cold forming process, a forging process, in particular a drop-forging process, and an extrusion pressing process, in particular an impact extrusion pressing process. Preferably, the forming process step comprises or consists of a wire drawing process.

According to an aspect of the disclosure, the process for manufacturing a composite screw may further comprise a step of severing a blank from the composite billet and a step of shaping the blank into the composite screw. The step of shaping the blank into the composite screw may in particular comprise threading and/or heading. Heading may be performed before, during or after threading.

According to an aspect of the present disclosure, the process for manufacturing a composite screw may further comprise a step of, in particular completely, removing the mantle material from the core material in a tip section. In particular, the mantle material may be removed to expose the core material in the tip section. Preferably, the core material is exposed in at least 50%, in particular in at least 75%, more particularly in at least 90%, of the complete surface of the tip section, or even in the entirety of the complete surface of the tip section. The removal of the mantle material in the tip section may be performed, at least partially or completely, before, after or during the severing of a blank form the composite billet. Alternatively, the removal of the mantle material in the tip section may be performed, at least partially or completely, before, after or during the shaping of a screw from the blank. Preferably, the removal of the mantle material in the tip section is performed before the shaping of a screw from the blank is finished, in particular before thread rolling. For example, the removal of the mantle material in the tip section may be performed during the shaping of a screw from the blank, namely after heading and before thread rolling.

The present disclosure also relates to screw manufactured in a process according to any one of the embodiments described above.

The present disclosure furthermore relates to screw having a core section made of a martensitic material and a mantle section surrounding the core section made of a corrosion-resistant steel material. The core section may comprise or may consist of a first material, in particular a martensitic material, and the mantle section may comprise or may consist of a second material different from the first material, in particular a corrosion-resistant steel material. The core section may be in direct physical contact with the mantle section. In particular, the screw may consist of the core section and the mantle section.

According to an aspect of the present disclosure, the screw has a tip section where the martensitic material is exposed. It shall be clear that the tip section of the screw is arranged at the opposite end of the screw with respect to the head section. The tip section may in particular be tapered. The tip section may have a pointed tip or an end having a tip diameter smaller than the diameter of the shaft section of the screw. The tip section may in particular extend along less than 33%, in particular along less than 25%, more particularly along less than 15%, of the axial length of the screw. The tip section may in particular extend along at least 1%, in particular along at least 5% or along at least 10% of the axial length of the screw. The tip section may be provided with a thread configured to cut an internal thread into the building material while being installed. In particular, the thread of the screw may be toothed in the tip section. The toothing of the thread may be limited or substantially limited to the tip section.

According to a further aspect of the present disclosure, the screw has a driving section where the martensitic material is circumferentially completely covered by the corrosion-resistant steel material. The driving section may comprise or may consist of a shaft section, which may in particular be partially or completely threaded, and a head section. The martensitic material of the core section may be completely covered in the axial direction at the rearward surface of the head section facing away from the tip section. Alternatively, the martensitic material may be exposed also at the rearward surface of the screw, in particular along an area where the blank from which the screw has been formed was severed from a composite billet.

The composite screw may in particular be a concrete screw, that is to say a screw for cutting into concrete. Concrete screws are used for anchoring loads in concrete without the use of dowels. They are made of two different types of steel: the tip is made of martensitic steel, which guarantees the necessary hardness, while the rear part is made of corrosion-resistant steel.

The present disclosure may in particular relate to a composite screw, in particular a bimetallic screw, which can be obtained and/or is obtained in particular in a manufacturing process as described hereinabove. The composite screw may be formed with a core section and a mantle section, the core section and the mantle section having a different material composition. The core section, which may in particular be configured to constitute the tip section, may comprise at least in some areas or in all areas a first steel material with 0.07 to 0.14% by weight carbon, 13 to 15% by weight chromium, 1.3 to 1.7% by weight molybdenum, 1.5 to 2.0% by weight nickel and 1.0 to 1.5% by weight manganese. In addition, this first steel material may comprise other elements customary for steel, for example vanadium (in particular <0.2% by weight), niobium (in particular <0.2% by weight), titanium (in particular <0.2% by weight) and/or silicon (in particular <0.5% by weight). The rest maybe iron with inevitable impurities, for example sulfur and/or phosphorus, in particular in each case <0.02% by weight. The figures given as "% by weight" can be understood as meaning percentages by weight in a customary sense. The first steel material may in particular have a proportion by weight of 0.08 to 0.12% carbon. The first steel material of the core section and/or of the tip section may be a martensitically hardened stainless steel.

The mantle section and/or the drive section may expediently comprise a duplex steel or an austenitic stainless steel, at least in some areas or in all areas. Such a steel may be particularly suitable for the drive section, in particular with regard to corrosion properties and load properties. For example, said second steel material of the drive section and/or of the mantle section may be an A2, A4, duplex, 1.4401, 1.4404, 1.4362, 1.4301 or 1.4578 steel.

Features that are explained in connection with the process for producing a composite screw can also be used for the composite screw, and conversely features that are explained in connection with the composite screw can also be used in the process for producing a composite screw. In particular, the composite screw may be made in the manufacturing process described, that is to say the composite screw may be the product of the manufacturing process described. In particular, the steels described in connection with the process and with the screw may be the same.

The insertion end of the composite screw may coincide with, in particular may be arranged on, the tip section. The drive section has in particular a rotary drive for rotating the composite screw, for example a screw head with an external polygonal structure or an internal polygonal structure. In particular, the drive section and the tip section preferably have a continuous thread.

### BRIEF DESCRIPTION OF THE DRAWINGS

- FIG. 1: is a schematic diagram of a process for manufacturing a composite screw according to an example.
- FIG. 2: is a schematic diagram of a composite continuous casting device which may be used in the process for manufacturing a composite screw.
- FIGs. 3A-3C: are schematic diagrams of a blank for manufacturing a composite screw according to an example; and
- FIG. 3D: is a schematic diagram of a composite screw according to an example.

### DETAILED DESCRIPTION

In the following, some particular examples are described in connection with the accompanying drawings. Same reference signs may indicate same or at least similar features. Any of the above-described features and the respective technical effects may apply accordingly to the corresponding features described below in connection with the drawings.

According to the present disclosure, composite screws or bolts are made of corrosion-resistant steel with a core for martensite transformation using the continuous casting process. For this purpose, either two melts can be cast or the core material can be fed to the continuous casting process in solid form. Subsequently, the strand is then processed using forming technology so that the microstructure of the core material is transformed into martensite. The core material in the tip section of the blank and/or of the screw may be exposed.

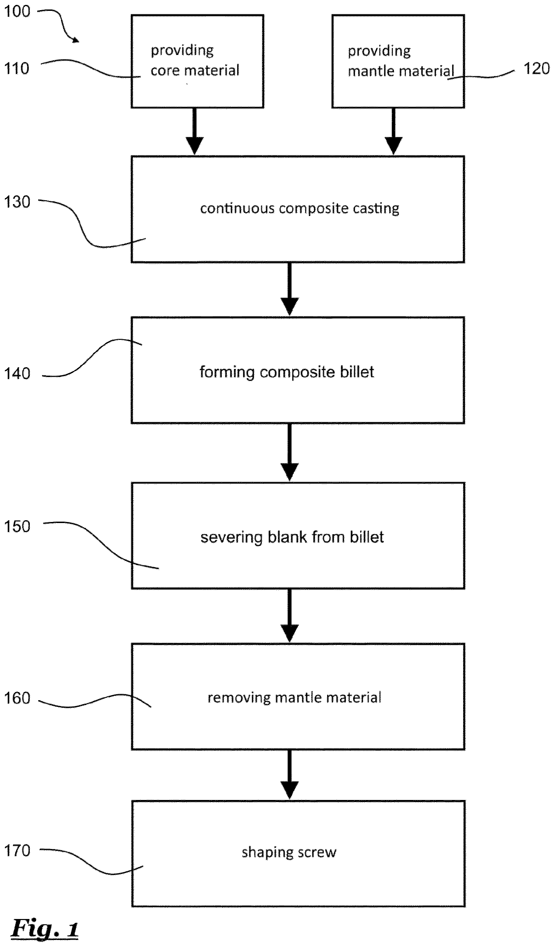

FIG. 1 shows a schematic flow diagram of a process for manufacturing a composite screw.

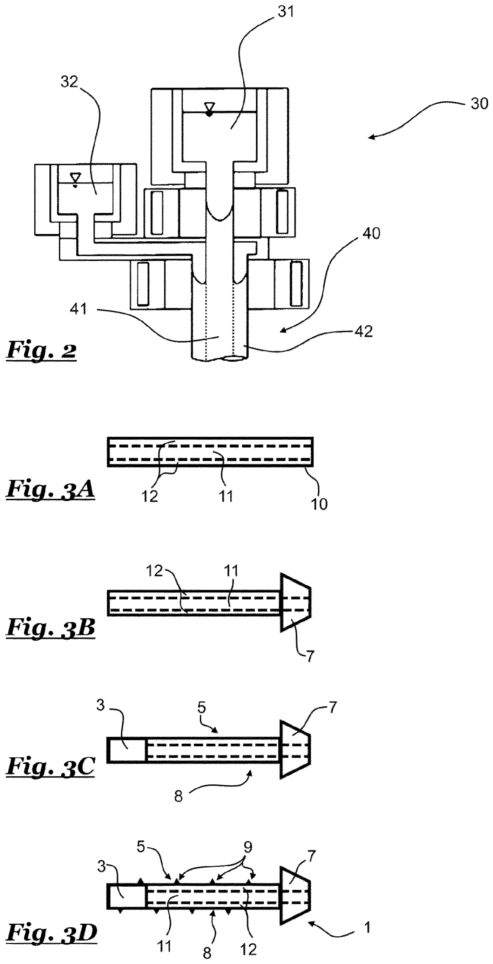

FIG. 1 schematically shows a flow diagram of a possible embodiment of a process 100 for manufacturing a composite screw 1 such as shown in Fig. 3D.

The screw 1 comprises a core section 11 and a mantle section 12 covering the core section 11. The screw 1 may have a tip section 3 and a drive section 5. The drive section may comprise a head section 7 and a shaft section 8 of the screw 1. The screw 1 may have a thread 9. The thread may extend along the tip section 3 and along the shaft section 8. The first material which forms the core section 11 of the screw 1 may be exposed in the tip section 3. The second material which forms the mantle section 12 is exposed in the driving section 5 and covers the first material of the core section 11.

The manufacturing process 100 illustrated in Fig. 1 comprises a step 110 of providing a first steel material (core material) and a step 120 of providing a second steel material (mantle material) which is different from the first material. The first steel material may be provided in solid form, for example as a billet, or in liquid form, for example as a first melt 31, such as shown in Fig. 2. The second steel material may in particular be provided in liquid form, for example as a second melt 32.

The manufacturing process 100 illustrated in Fig. 1 comprises a step 130 of continuous composite casting using the first steel material and the second steel material. In particular, a step 140 of forming a composite billet 40 may be part of the manufacturing process. The step 130 of continuous composite casting may be performed in order to form the composite billet 40.

The step 130 of continuous casting and the step 140 of forming a composite billet may be performed with the aid of a continuous casting device 30 such as shown in Fig. 2. The step 140 of forming a composite billet, in particular composite casting, uses the first steel material, such as the first melt 31 indicated in Fig. 2, and the second steel material, such as the second melt 32, to create a strand comprising a strand core 41 coaxially surrounded by a strand mantle 42. The strand mantle 42 may completely cover the circumference of the substantially circular-cylindrical composite billet 40.

After the composite billet 40 is produced, for example in the continuous casting device 30 of Fig. 2, it may subsequently be used to provide one or more blanks 10 for making screws 1. Individual blanks 10 may be made by performing a step 150 of severing a respective blank 10 from the composite billet 40. It shall be clear that a multitude of blanks 10 may be obtained from a single strand or composite billet 40. The blank 10 may be provided in the form of a cylindrical rod, as shown in Fig. 3A.

In the process 100 of manufacturing a screw 1, the second steel material is removed in the tip section 3 of the screw 1 so as to expose the first steel material there.

The process 100 of manufacturing a screw 1 finally comprises a step 170 of shaping a screw 1, in particular from a blank 10. As part of step 170, a head may be formed, for example by upsetting. The head can form part of the rotary drive on the finished composite screw 1. It is conceivable that the step 170 of shaping the screw 1 may commence before the step 150 of severing a blank 10 is performed, for example by shaping the head section 7 onto a forward-facing end of the composite billet 40 or strand before the blank 10 is severed (not illustrated).

It is conceivable that the step 160 of removing mantle material may be performed after the step 170 of shaping the screw 1 has begun. For example, as indicated in Fig. 3B, the blank 10 may first be provided with a head section 7 before the first steel material is exposed in the tip section 3. Alternatively, the first steel material may be exposed before any shaping of the screw 1 from a blank 10 has occurred. According to another alternative, the second steel material may be removed from the strand or composite billet 40 in a section designated to become a tip section 3 before a blank 10 is severed from the strand or composite billet 40 (not shown).

Providing of the screw 1 with a thread 9 is performed only after the core material is exposed in the tip section 3 or a section designated to become a tip section 3. The thread forming is preferably performed simultaneously and/or continuously for the tip section 3 and the shaft section 8 together. The thread forming may in particular be thread rolling.

In order to obtain the core strand 41 and subsequently the core section 11, in step 130, a first melt 31 or a wire-shaped first billet, made of a first steel material containing 0.07 to 0.14% by weight, preferably 0.08 to 0.12% by weight, carbon, 13 to 15% by weight chromium, 1.3 to 1.7% by weight molybdenum, 1.5 to 2.0% by weight nickel and 1.0 to 1.5% by weight manganese may be provided. In addition, the first steel material may comprise other elements customary for steel, for example vanadium (in particular <0.2% by weight), niobium (in particular <0.2% by weight), titanium (in particular <0.2% by weight) and/or silicon (in particular< 0.5% by weight). The rest maybe iron with inevitable impurities, for example sulfur and/or phosphorus, in particular in each case <0.02% by weight.

The severing step 150 may comprise cutting the blank 10 to length (not shown). The process 100 may additionally comprise one or more cleaning steps for cleaning the strand, the composite billet 40, the blank 10 and/or the screw 1 (not shown).

In order to obtain the strand mantle 42 and subsequently the mantle section 12, in step 130, a second melt 32 made of a duplex steel or of an austenitic stainless steel may be provided.

Finally, the composite bimetallic screw 1 shown in Fig. 3D may be obtained with a metallic tip section 3 and a metallic drive section 5 having surfaces of different materials, the surface of the tip section 3 being obtained from the core material and the surface of the drive section 5 being obtained from the mantle material. The composite screw 1 has a cylindrical screw shaft 8, at the end of which a hexagon screw head 7 may be provided, forming a rotary drive.

The screw 1 is formed jointly by the core section 11 and the mantle section 12. The rotary drive is located at the rear end region of the drive section 5. A thread 9 extends along part of the length of the screw 1, preferably along at least part of the tip section 3 and along at least part of the shaft section 8. The thread 9 defines an outside diameter, which may in particular be constant, and a, particularly constant, pitch.

The screw 1 can be screwed into a hole in a mineral substrate, in particular in a concrete substrate, the thread 9, which is formed as a cutting thread, being able to cut a corresponding thread in the substrate when screwed in.

### LIST OF REFERENCE SIGNS

- 1: screw
- 3: tip section
- 5: drive section
- 7: head section
- 8: shaft section
- 9: thread
- 10: blank
- 11: core section
- 12: mantle section
- 30: continuous casting device
- 31: first melt
- 32: second melt
- 40: composite billet
- 41: strand core
- 42: strand mantle

- 100: process
- 110: providing a first steel material
- 120: providing a second steel material
- 130: continuous casting
- 140: billet forming
- 150: severing blank
- 160: removing mantle material
- 170: shaping screw

## Claims

1. A process for manufacturing a composite screw, in particular a concrete screw, having a core section made of a martensitic material and a mantle section surrounding the core section made of a corrosion-resistant steel material.

2. The process for manufacturing a composite screw according to claim 1, comprising a step of continuous composite casting a composite billet, wherein a composite material strand is cast having a strand core made of an austenite material and a strand mantle completely surrounding the core in a circumferential direction made of the corrosion-resistant steel material.

3. The process for manufacturing a composite screw according to claim 2, wherein the strand core is provided as a solid for the step of continuous composite casting.

4. The process for manufacturing a composite screw according to claim 2, wherein a first melt is provided for forming the strand core in the continuous composite casting step.

5. The process for manufacturing a composite screw according to one of the claims 2 to 4, wherein a second melt is provided for forming the strand mantle in the continuous composite casting step.

6. The process for manufacturing a composite screw according to one of the claims 2 to 5, wherein a forming process step is performed on the billet which causes the core section, in particular the complete core section, of the composite material strand to experience martensitic transformation.

7. The process for manufacturing a composite screw according to claim 6, wherein the forming process step comprises at least one of a wire drawing process, a cold forming process, a forging process, in particular a drop-forging process, and an extrusion pressing process, in particular an impact extrusion pressing process.

8. The process for manufacturing a composite screw according to one of the claims 2 to 7, further comprising a step of severing a blank from the composite billet and a step of shaping the blank into the composite screw.

9. The process for manufacturing a composite screw according to any one of the preceding claims, further comprising a step of, in particular completely, removing the mantle material from the core material in a tip section.

10. A screw, in particular a concrete screw, manufactured in a process according to any one of the preceding claims.

11. A screw, in particular a concrete screw, having a core section made of a martensitic material and a mantle section surrounding the core section made of a corrosion-resistant steel material.

12. The screw according to claim 11, wherein the screw has a tip section where the martensitic material is exposed.

13. The screw according to claim 11 or 12, wherein the screw has a driving section where the martensitic material is circumferentially completely covered by the corrosion-resistant steel material.
